# EUROPEAN PATENT SPECIFICATION

(11) **EP 3 535 137 B1**
(45) Date of publication and mention of the grant of the patent: **17.06.2020**
(21) Application number: 17786934.4
(22) Date of filing: 20.10.2017
(51) Int. Cl.: B60C 1/00, C08L 9/06

(54) **RUBBER COMPOUND FOR PNEUMATIC TYRE PORTIONS**
KAUTSCHUKVERBINDUNG FÜR LUFTREIFENTEILE
COMPOSÉ DE CAOUTCHOUC POUR PARTIES DE BANDAGE PNEUMATIQUE

(30) Priority: 03.11.2016 IT 201600110627
(43) Date of publication of application: 11.09.2019
(73) Proprietor: Bridgestone Corporation, Tokyo 104-8340 (JP)
(72) Inventor: GRENCI, Valeria, 00128 Roma (IT); DI RONZA, Raffaele, 00128 Roma (IT)
(74) Representative: Marchetti, Alessio
(86) International application number: PCT/EP2017/076814
(87) International publication number: WO 2018/082935

(56) References cited:
- EP-A2- 0 928 810
- WO-A1-2015/121326
- JP-A- 2007 023 295

## Description

The present invention relates to rubber compounds for pneumatic tyre portions. In particular, the invention relates to rubber compounds for tread portions, to which the description will make explicit reference without loss of generality.

As is known, part of the research in the pneumatic tyre field has focused upon obtaining treads exhibiting even better performance in terms of rolling resistance and abrasion resistance.

In this respect, it has long been known to use silica as a reinforcing filler in tread compounds. The choice of silica is dictated by advantages in terms of rolling resistance and wet grip that this entails.

The silica is used in combination with silane bonding agents, which bind to the silanol groups of silica in order to inhibit the agglomeration thereof and, at the same time, to chemically bind it to the polymer base.

A very interesting class of silane bonding agents is that of the trialkoxymercaptoalkyl-silanes. Indeed, this class of silane bonding agents guarantees to rubber compounds important improvements in terms of wear and rolling resistance.

In particular, the compound reported below is the one proven to be the most effective.

SH(CH₂)₃Si(OCH₂CH₃)(O(CH₂CH₂O)₅(CH₂)₁₃CH₃)₂

However, the use of this class of silane bonding agent has the disadvantage of increasing the viscosity of the compound being processed, with obvious consequences concerning the processability thereof.

Generally, in order to avoid the aforementioned processability problems, zinc oxide (ZnO) is used during the first blending step (masterbatch). Zinc oxide is able to block the sulfhydryl groups of the silane, reducing the reactivity thereof and thus avoiding the consequential processability problems.

The effect of the ZnO within the masterbatch is, therefore, to mitigate the reactivity of the trialkoxymercaptoalkyl-silane. However, this effect, even though it manages to avoid the unwanted increase in viscosity, results in reducing the effectiveness of the trialkoxymercaptoalkyl-silane in terms of rolling resistance and, in particular, in terms of wear resistance.

In other words, to date, in order to avoid processability problems, it is not possible to benefit from all of the advantages that could potentially be obtained from use of the trialkoxymercaptoalkyl-silane.

The purpose of the present invention is to make a compound for pneumatic tyre portions comprising an un-blocked trialkoxymercaptoalkyl-silane as the silane agent, and therefore, to make full use of the advantages thereof in terms of rolling resistance and wear resistance without incurring the processability disadvantages of the prior art.

The inventors of the present invention have unexpectedly found that the use of a particular functionalized silica allows for the use of trialkoxymercaptoalkyl-silane without the simultaneous presence of ZnO within the masterbatch, and without incurring in processability problems.

The object of the present invention is a process for preparing a rubber compound for a pneumatic tyre portion; said process comprising a first non-productive mixing step wherein at least one cross-linkable unsaturated-chain polymer base, silica, a silane bonding agent included within the class of trialkoxymercaptoalkyl-silanes are mixed together and a productivemixing step, wherein, at least a vulcanization system and Zn oxide, are added and blended to the compound under preparation ; said process being characterized in that said silica is functionalized with dicarboxylic acids, and in that the first non-productive mixing step does not comprise Zn oxide.

Here and hereinafter, the term "cross-linkable unsaturated-chain polymer base" refers to any natural or synthetic non-cross-linked polymer capable of assuming all of the chemical-physical and mechanical characteristics typically assumed by elastomers after cross-linking (vulcanization) with sulfur-based systems.

Here and hereinafter, a vulcanization system refers to a complex of ingredients comprising at least sulfur and accelerant compounds that, in the preparation of the compound, are added during a final mixing step with the purpose of promoting the vulcanization of the polymer base once the compound is subjected to vulcanization temperature.

Here and hereinafter "non-productive mixingstep" means a mixingstep, wherein, to the cross-linkable unsaturated-chain polymer base are added and blended the compound ingredients with the exception of the vulcanization system; while "productive mixing step" means a mixing step, wherein, the vulcanization system is added to and blended with the compound under preparation.

Preferably, within said dicarboxylic acids the two carboxyl groups are spaced apart by an alkyl chain made of from 2 to 18, more preferably from 2 to 10, carbon atoms.

Preferably, said dicarboxylic acids are chosen from the group made of succinic acid, glutaric acid, adipic acid and mixtures thereof.

Preferably, said silane binder is SH(CH₂)₃Si(OCH₂CH₃)(O(CH₂CH₂O)₅(CH₂)₁₃CH₃)₂

A further object of the present invention is a rubber compound obtained using the process of the present invention.

A further object of the present invention is a pneumatic tyre portion, preferably a tread portion, made with the compound obtained using the process of the present invention.

Still a further object of the present invention is a pneumatic tyre comprising a portion made with the compound obtained using the process according to the present invention.

The following are examples of non-limiting embodiments given purely by way of illustration.

Four rubber compounds were made, of which the first three (Compounds A-C) constitute comparison examples, while the last (Compound D) was made using the process according to the present invention.

In particular, the first comparative compound (Compound A) provides for the use of a trialkoxymercaptoalkyl-silane without the use of ZnO within the masterbatch and in the presence of a non-functionalized silica; the second comparative compound (Compound B) represents the currently adopted solution and differs from Compound A in that part of the ZnO is used within the masterbatch in order to avoid processability problems due to an increase in viscosity; the third comparative compound (Compound C) differs from Compound B in that it provides for the use of functionalized silica; and, finally, the compound according to the invention (Compound D) provides for the use of trialkoxymercaptoalkyl-silane and functionalized silica within the masterbatch while the ZnO is added only during the productive mixing step.

The example compounds were prepared according to the process reported below.

### - Preparation of the compounds -

### (1^{st} productive mixing step - MASTERBATCH)

Before the start of the mixing, a mixer with tangential rotors and an internal volume of between 230 and 270 liters was loaded with the cross-linkable unsaturated-chain polymer base, the silica, the silane bonding agent and, where provided, the zinc oxide, reaching a fill factor of 66-72%.

The mixer was operated at a speed of between 40-60 rpm, and the mixture thus formed was discharged once a temperature of 145-165°C had been reached.

### (2^{nd} non-productive mixing step)

The mixture obtained from the previous step was reworked in the mixer operating at a speed of between 40-60 rpm and, subsequently, removed once a temperature of between 130-150°C had been reached.

### (Productive mixing step)

The vulcanization system, the antioxidant compounds and zinc oxide were added to the mixture obtained from the previous step , reaching a fill factor of between 63-67%.

The mixer was operated at a speed of between 20-40 rpm, and the mixture thus formed was discharged once a temperature of between 100-110°C had been reached.

Table I reports the compositions in phr of the Compounds A - D

**TABLE I**

| | A | B | C | D |
|---|---|---|---|---|
| First non-productive blending step | | | | |
| S-SBR | 49 | | | |
| E-SBR | 51 | | | |
| Silane bonding agent | 9.3 | | | |
| Silica * | 80.0 | 80.0 | -- | -- |
| Silica** | -- | -- | 80.0 | 80.00 |
| Zinc oxide | -- | 1.5 | 1.5 | -- |

| Productive blending step | | | | |
|---|---|---|---|---|
| Zinc oxide | 2.5 | 1 | 1 | 2.5 |
| Sulfur | 2.0 | | | |
| TBBS | 2.5 | | | |
| MBTS | 0.5 | | | |
| TMQ | 1.5 | | | |

| | | | | |
|---|---|---|---|---|
| S-SBR is a polymer base obtained by means of a solution polymerization process with an average molecular weight, respectively, of between 800-1500x10³ and of between 500-900x10³, with a styrene content of between 10 to 45% and a vinyl content of between 20 and 70%. E-SBR is a polymer base obtained by means of an emulsion polymerization process with an average molecular weight, respectively, of between 500-900x10³, with a styrene content of between 20 to 45% and used with an oil content of between 0 and 30%. Silica* is a silica with a surface area of about 170 m²/g and marketed under the name Ultrasil VN3 by the EVONIK company. Silica** is a functionalized silica with dicarboxylic acid and is marketed under the name EFFICIUM® by the SOLVAY company. The process for preparing this silica is described in the patent application WO2014033300, included here for reference. The silane bonding agent belongs to the class of trialkoxymercaptoalkyl-silanes (structural formula SH(CH₂)₃Si(OCH₂CH₃)(O(CH₂CH₂O)₅(CH₂)₁₂CH₃)₂) and is marketed under the name SI363 by the EVONIK company. TBBS is the acronym for the compound N-tert-butyl-2-benzothiazylsulfenamide used as vulcanizing accelerant. MBTS is the acronym for the compound mercaptobenzothiazole-disulfide used as a vulcanization accelerant. TMQ is the acronym for the compound 1,2-Dihydro-2,2,4-trimethylquinoline used as an antioxidant. | | | | |

The compounds reported in Table I were subjected to a viscosity measurement and, once vulcanized, to a rolling resistance, and abrasion resistance measurement.

The viscosity was measured according to the ASTM 1646 standard.

The rolling resistance derives from the dynamic properties of the compounds. The rolling resistance parameter is related to the values of tanδ at 60°C: the lower the tanδ value at 60°C, the better the rolling resistance is. The dynamic properties were measured according to the ASTM D5992 standard.

The abrasion resistance was measured according to the DIN 53516 standard.

For a more immediate understanding of the advantages of the present invention, Table II reports the values for the measurements above, indexed to the values of the comparison Compound A.

**TABLE II**

| | A | B | C | D |
|---|---|---|---|---|
| Viscosity | 100 | 60 | 50 | 64 |
| Rolling resistance | 100 | 90 | 90 | 100 |
| Abrasion resistance | 100 | 60 | 60 | 100 |

For the viscosity parameter, the lower the values the more preferable they are; while, for the rolling and abrasion resistance parameters, the higher the values, the more preferable they are.

From the values listed in Table II, it can be seen how the use of functionalized silica makes it possible to use the un-blocked silane bonding agent (ZnO is in fact only added during the productive mixing step), guaranteeing, at the same time, the maintenance of the viscosity within levels such as not to compromise the processability of the compound.

In other words, by virtue of the process that is the object of the present invention, it is possible to fully exploit the potential of trialkoxymercaptoalkyl-silane in terms of rolling resistance and wear resistance without suffering the disadvantages deriving from high viscosity.

The inventors of this invention have experimentally found that the use of functionalized silica with dicarboxylic acids makes it possible to contain the increase in viscosity due to the trialkoxymercaptoalkyl-silane reactivity. This effect has, therefore, allowed the inventors to avoid the use within the masterbatch of ZnO and, consequently, to be able to fully exploit the potential of trialkoxymercaptoalkyl-silane as described above.

## Claims

1. Process for the preparation of a rubber compound for a pneumatic tyre portion; said process comprising a first non-productive mixing step, wherein, at least one cross-linkable unsaturated-chain polymer base, silica, a silane bonding agent comprised within the class of trialkoxymercaptoalkyl-silanes are mixed together and a productive blending step, wherein, at least a vulcanization system and Zn oxide are added and blended to the compound under preparation ; said process being **characterized in that** said silica is functionalized with dicarboxylic acids, and **in that** said first non-productive mixing step does not comprise Zn oxide.

2. Process according to claim 1, **characterized in that** within said dicarboxylic acids the two carboxyl groups are spaced apart by an alkyl chain made of from 2 to 18 carbon atoms.

3. Process according to claim 2, **characterized in that** said alkyl chain is made of from 2 to 10 carbon atoms.

4. Process according to one of the preceding claims, **characterized in that** said dicarboxylic acids are chosen from the group made of succinic acid, glutaric acid, adipic acid or a mixture thereof.

5. Process according to one of the preceding claims, **characterized in that** said silane bonding agent is SH(CH₂)₃Si(OCH₂CH₃)(O(CH₂CH₂O)₅(CH₂)₁₃CH₃)₂.

6. Rubber compound obtained with the process according to one of the preceding claims.

7. Pneumatic tyre portion made with the compound according to claim 6.

8. Tread portion made with the compound according to claim 6.

9. Pneumatic tyre comprising a portion according to claim 7 or 8.

## Patentansprüche

1. Verfahren zur Herstellung einer Gummimischung für einen Luftreifenabschnitt; wobei das Verfahren einen ersten nicht-produktiven Mischungsschritt, wobei mindestens eine vernetzbare ungesättigte Polymerkettenbasis, Kieselerde, ein Silanhaftmittel, das innerhalb der Klasse von Trialkoxymercaptoalkylsilanen umfasst ist, zusammengemischt werden, und einen produktiven Vermischungsschritt umfasst, wobei mindestens ein Vulkanisationssystem und Zn-Oxid zu der Mischung, die gerade hergestellt wird, hinzugefügt und vermischt werden; wobei der Prozess **dadurch gekennzeichnet ist, dass** die Kieselerde mit Dicarbonsäuren funktionalisiert ist, und dadurch, dass der erste nicht-produktive Mischungsschritt kein Zn-Oxid umfasst.

2. Verfahren nach Anspruch 1, **dadurch gekennzeichnet, dass** die zwei Carboxylgruppen innerhalb der Dicarbonsäuren durch eine Alkylkette beabstandet sind, die aus 2 bis 18 Kohlenstoffatomen besteht.

3. Verfahren nach Anspruch 2, **dadurch gekennzeichnet, dass** die Alkylkette aus 2 bis 10 Kohlenstoffatomen besteht.

4. Verfahren nach einem der vorstehenden Ansprüche, **dadurch gekennzeichnet, dass** die Dicarbonsäuren ausgewählt sind aus der Gruppe bestehend aus Bernsteinsäure, Glutarsäure, Adipinsäure oder einem Gemisch davon.

5. Verfahren nach einem der vorstehenden Ansprüche, **dadurch gekennzeichnet, dass** das Silanhaftmittel SH(CH₂)₃Si(OCH₂CH₃)(O(CH₂CH₂O)₅(CH₂)₁₃CH₃)₂ ist.

6. Gummimischung, erhalten mit dem Verfahren nach einem der vorstehenden Ansprüche.

7. Luftreifenabschnitt, gefertigt mit der Mischung nach Anspruch 6.

8. Laufflächenabschnitt, gefertigt mit der Mischung nach Anspruch 6.

9. Luftreifen, umfassend einen Abschnitt nach Anspruch 7 oder 8.

## Revendications

1. Procédé pour la préparation d'un composé de caoutchouc pour une partie de pneumatique ; ledit procédé comprenant une première étape de mélange non productif, dans laquelle au moins une base polymère à chaîne insaturée réticulable, de la silice, un agent de liaison silane compris dans la classe des trialcoxymercaptoalkyl silanes sont mélangés ensemble et une étape de mélange productif, où au moins un système de vulcanisation et de l'oxyde de Zn sont ajoutés et mélangés au composé en préparation ; ledit procédé étant **caractérisé en ce que** ladite silice est fonctionnalisée avec des acides dicarboxyliques, et **en ce que** ladite première étape de mélange non productif ne comprend pas d'oxyde de Zn.

2. Procédé selon la revendication 1, **caractérisé en ce que** dans lesdits acides dicarboxyliques les deux groupes carboxyle sont espacés par une chaîne alkyle constituée de 2 à 18 atomes de carbone.

3. Procédé selon la revendication 2, **caractérisé en ce que** ladite chaîne alkyle est constituée de 2 à 10 atomes de carbone.

4. Procédé selon l'une des revendications précédentes, **caractérisé en ce que** lesdits acides dicarboxyliques sont choisis dans le groupe constitué par l'acide succinique, l'acide glutarique, l'acide adipique ou un mélange de ceux-ci.

5. Procédé selon l'une quelconque des revendications précédentes, **caractérisé en ce que** ledit agent de liaison de silane est SH(CH₂)₃Si(OCH₂CH₃)(O(CH₂CH₂O)₅(CH₂)₁₃CH₃)₂.

6. Composé de caoutchouc obtenu par le procédé selon l'une des revendications précédentes.

7. Partie de pneumatique réalisée avec le composé selon la revendication 6.

8. Partie de bande de roulement réalisée avec le composé selon la revendication 6.

9. Pneumatique comprenant une partie selon la revendication 7 ou 8.
